# EUROPEAN PATENT APPLICATION

(11) **EP 4 439 688 A1**
(43) Date of publication of application: **02.10.2024**
(21) Application number: 23747364.0
(22) Date of filing: 27.01.2023
(51) Int. Cl.: H01M 4/04, H01M 10/0562, H01M 4/02

(54) **METHOD FOR MANUFACTURING ELECTRODE FOR ALL-SOLID-STATE BATTERY, AND ELECTRODE FOR ALL-SOLID-STATE BATTERY**

(30) Priority: 27.01.2022 KR 20220012302; 26.01.2023 KR 20230010183
(71) Applicant: LG Energy Solution, Ltd., Seoul 07335 (KR)
(72) Inventor: KWON, Hyejin, Daejeon 34122 (KR); KIM, Sohee, Daejeon 34122 (KR); KIM, Jeonggil, Daejeon 34122 (KR); KIM, Taegon, Daejeon 34122 (KR); KIM, Ki Tae, Daejeon 34122 (KR); LEE, Choonghyeon, Daejeon 34122 (KR); KIM, Myeongsoo, Daejeon 34122 (KR)
(74) Representative: Goddar, Heinz J.
(86) International application number: PCT/KR2023/001234
(87) International publication number: WO 2023/146323

(57) **Abstract**

The present disclosure relates to a method of manufacturing an electrode for an all-solid-state battery comprising the steps of preparing granules containing an electrode active material, an electrically conductive material and a binder; mixing the granules with solid electrolyte powder; and forming an electrode active material layer by placing a mixture of the granules and the solid electrolyte powder on a current collector and pressurizing the mixture, and an electrode for an all-solid-state battery manufactured thereby.

## Description

### [Technical Field]

The present application claims the benefits of priorities based on Korean Patent Application No. 10-2022-0012302 filed on January 27, 2022 and Korean Patent Application No. 10-2023-0010183 filed on January 26, 2023, all the contents of which are incorporated as a part of this specification.

This application relates to a method for manufacturing an electrode for an all-solid-state battery and an electrode for an all-solid-state battery.

### [Background Art]

From the viewpoint of the capacity, safety, output, large size, miniaturization, etc. of the battery, various batteries that can overcome the limitations of lithium secondary batteries are currently being studied.

Typically, a metal-air battery that has a very large theoretical capacity in terms of capacity compared to a lithium secondary battery, an all-solid-state battery that does not have an explosion hazard in terms of safety, a supercapacitor in terms of output, a NaS battery or a redox flow battery (RFB) in terms of large size, a thin film battery in terms of miniaturization and the like are continuously being studied in academia and industry.

Among them, the all-solid-state battery refers to a battery in which the liquid electrolyte used in the existing lithium secondary battery is replaced with a solid, and it does not use a flammable solvent in the battery, so there is no ignition or explosion caused by the decomposition reaction of the conventional electrolyte solution, and thus safety can be greatly improved. In addition, in the case of the all-solid-state battery, since Li metal or Li alloy can be used as a material for the negative electrode, there is an advantage that the energy density for the mass and volume of the battery can be remarkably improved.

In particular, among solid electrolytes for the all-solid-state battery, inorganic solid electrolytes can be classified into sulfide-based and oxide-based. Currently, the most technologically developed solid electrolyte is a sulfide-based solid electrolyte, and as a material for this solid electrolyte, even a material for a sulfide-based solid electrolyte with an ion-conductivity close to that of an organic electrolyte solution has been developed.

On the other hand, since the all-solid-state battery uses a solid electrolyte unlike conventional lithium secondary batteries that use a liquid electrolyte, the solid electrolyte cannot easily penetrate into the pores of the electrode active material layer, and thus there is a problem that it is difficult to physically contact the electrode active material and the solid electrolyte. As a means to improve these problems, a solid electrolyte in liquid phase is generally used. As such, when using a solid electrolyte in liquid phase, problems such as the limitation of solvent selection, the inferiority of dispersibility, the generation of voids due to drying of the solvent and the reduction of the loading amount of the electrode active material due to this may occur. In addition, a separate process is required to dry the solvent of the solid electrolyte in liquid phase, and since isostatic press methods such as a Cold Isostatic Press (CIP) and a Warm Isostatic Press (WIP) are applied to reduce the porosity due to drying of the solvent, there is a problem that a continuous process is not possible, and the process becomes complicated.

(Patent Document 1) Korean Laid-open Patent Publication No. 10-2021-0045858 (2021.04.27)

### [Disclosure]

### [Technical Problem]

It is one of the objects of the present invention to provide a method for manufacturing an electrode for an all-solid-state battery capable of reducing the porosity of an electrode active material layer and an electrode for an all-solid-state battery manufactured thereby.

It is another object of the objects of the present invention to provide a method for manufacturing an electrode for an all-solid-state battery comprising an electrode active material layer highly loaded with the electrode active material by increasing the loading amount of the electrode active material and an electrode for an all-solid-state battery manufactured thereby.

It is still another object of the present invention to provide a method for manufacturing an electrode for an all-solid-state battery capable of simplifying the process and an electrode for an all-solid-state battery manufactured thereby.

### [Technical Solution]

In one embodiment, the present invention provides a method for manufacturing an electrode for an all-solid-state battery comprising the steps of preparing granules containing an electrode active material, an electrically conductive material and a binder; mixing the granules with solid electrolyte powder; and forming an electrode active material layer by placing a mixture of the granules and the solid electrolyte powder on a current collector and pressurizing the mixture, and an electrode for an all-solid-state battery manufactured thereby.

### [Advantageous Effects]

As one of the effects of the present invention, a method for manufacturing an electrode for an all-solid-state battery capable of reducing the porosity of an electrode active material layer and an electrode for an all-solid-state battery manufactured thereby can be provided.

As another one of the effects of the present invention, a method for manufacturing an electrode for an all-solid-state battery comprising an electrode active material layer highly loaded with the electrode active material by increasing the loading amount of the electrode active material, and an electrode for an all-solid-state battery manufactured thereby can be provided.

As still another one of the effects of the present invention, a method for manufacturing an electrode for an all-solid-state battery capable of simplifying the process and an electrode for an all-solid-state battery manufactured thereby can be provided.

### [Description of Drawings]

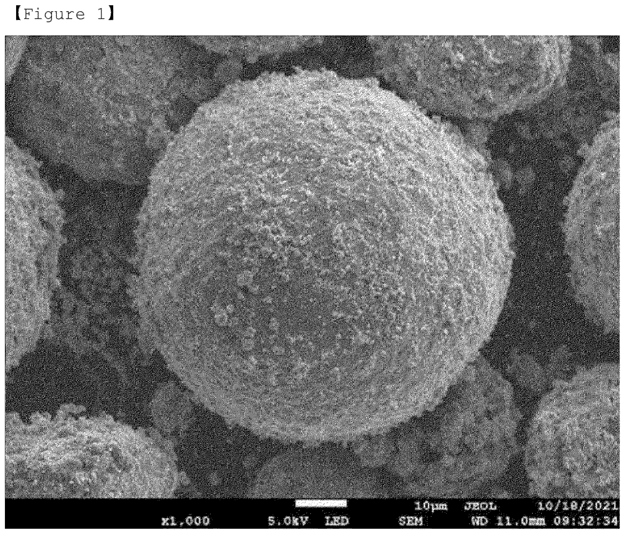

FIG. 1 shows an image of the mixture of the granules and the solid electrolyte powder prepared according to one embodiment of the present invention observed with a scanning electron microscope (SEM). The magnification of the image is ×1,000.

### [Best Mode]

Hereinafter, one embodiment of the present invention will be described in detail. However, the following description should be understood as illustrative for helping understanding of the present invention, and should not be construed as limiting or restricting the present invention. In addition, it goes without saying that the present invention is not limited to the accompanying drawings. Those skilled in the art will be able to implement the present invention in various forms without departing from the technical spirit of the present invention with reference to the following description and accompanying drawings.

The method for manufacturing the electrode for an all-solid-state battery according to one embodiment of the present invention comprises the steps of preparing granules containing an electrode active material, an electrically conductive material, and a binder; mixing the granules with solid electrolyte powder; and forming an electrode active material layer by placing a mixture of the granules and the solid electrolyte powder on a current collector and pressurizing the mixture.

According to one embodiment of the present invention, the granules are spherical particles containing the electrode active material, the electrically conductive material, and the binder. Here, the spherical shape does not mean a complete spherical shape in a strict sense, and generally the spherical particle is used as a comprehensive concept including round-shaped particles. The electrode active materials, which are fine particles in a powder state, are combined by a binder solution with an electrically conductive material to grow into particles with a specific range of specifications.

According to one embodiment of the present invention, the granules are spherical particles having a diameter of 30gm to 150*µ*m. Here, since the spherical particle does not mean a perfect spherical particle, the diameter refers to the largest value among distances from an arbitrary point on the surface of the particle to a point on another surface. Specifically, the diameter of the granules may be 30*µ*m or more, 35*µ*m or more, 40*µ*m or more, 45*µ*m or more, or 50*µ*m or more, and 150*µ*m or less, 145*µ*m or less, 140*µ*m or less, 135*µ*m or less, 130*µ*m or less, 125*µ*m or less, or 120*µ*m or less, and may be 30*µ*m to 150*µ*m, 40*µ*m to 135*µ*m, or 50*µ*m to 120*µ*m. If the diameter of the granules is less than the above range, as the voids between the granules are small, the amount of solid electrolyte powder that penetrates and coats between granules is reduced, and thus the physical contact between the electrode active material and the solid electrolyte may not be easy as an all-solid-state battery. If the diameter of the granules exceeds the above range, since the distance between the surface in contact with the solid electrolyte and the center of the granule is increased, the electrode active materials contained in the granule may not be properly utilized.

The method for manufacturing the electrode for an all-solid-state battery according to one embodiment of the present invention may be for manufacturing any one of a positive electrode and a negative electrode for an all-solid-state battery, and more specifically, may be for manufacturing a positive electrode. In other words, the electrode for an all-solid-state battery according to one embodiment of the present invention may be any one of a negative electrode and a positive electrode, and more specifically, the electrode for an all-solid-state battery may be a positive electrode.

If the electrode for an all-solid-state battery according to one embodiment of the present invention is a positive electrode, the electrode active material included in the granules is not particularly limited as long as it can be used as a positive electrode active material for a lithium-ion secondary battery. For example, a lithium transition metal oxide containing one or more transition metals may be used as a positive electrode active material. According to one embodiment of the present invention, the positive electrode active material may be selected from the group consisting of LiCoO₂, LiNiO₂, LiMnO₂, Li₂MnO₃, LiMn₂O₄, Li (NiₐCo_{b}Mn_{c})O₂ (0<a<1, 0<b<1, 0<c<1, a+b+c=1), LiNi_{1-y}Co_{y}O₂(O<y<1), LiCo_{1-y}Mn_{y}O₂, LiNi_{1-y}Mn_{y}O₂(O<y<1), Li(NiₐCo_{b}Mn_{c})O₄(0<a<2, 0<b<2, 0<c<2, a+b+c=2), LiMn_{2-z}Ni_{z}O₄(0<z<2), LiMn_{2-z}Co_{z}O₄(0<z<2), LiNi_{0.6}Co_{0.2}Mn_{0.2}O₂ and combinations thereof.

If the electrode for an all-solid-state battery according to one embodiment of the present invention is a negative electrode, the electrode active material comprised in the granules is not particularly limited as long as it can be used as a negative electrode active material for a lithium-ion secondary battery. For example, the negative electrode active material may be one or more types selected from carbon such as non-graphitizable carbon and graphite-based carbon; metal composite oxides such as LiₓFe₂O₃(0≤x≤1), LiₓWO₂(0≤x≤1), SnₓMe₁₋ₓMe'_{y}O_{z}(Me: Mn, Fe, Pb, Ge; Me': Al, B, P, Si, elements of groups 1, 2 and 3 of the periodic table, halogen; 0<x≤1; 1≤y≤3; 1≤z≤8); lithium metal; lithium alloy; silicon-based alloy; tin-based alloy; metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅; an electrical conductivity polymer such as polyacetylene; Li-Co-Ni based material; titanium oxide; lithium titanium oxide. According to one embodiment of the present invention, the negative electrode active material may comprise a carbonaceous material and/or Si.

The electrically conductive material comprised in the granules according to one embodiment of the present invention is not particularly limited as long as it can be placed within the granules to impart electrical conductivity between the electrode active material and the electrolyte. For example, the electrically conductive material may be one or two or more types of mixture selected from graphite such as natural graphite or artificial graphite; carbon black such as carbon black, acetylene black, Ketjen black, channel black, furnace black, lamp black, and thermal black; electrically conductive fibers such as carbon fibers such as vapor grown carbon fiber (VGCF) or metal fibers; carbon fluoride; metal powders such as aluminum and nickel powder; electrically conductive whiskers such as zinc oxide and potassium titanate; electrically conductive oxides such as titanium oxide; and electrically conductive materials such as polyphenylene derivatives.

The binder contained in the granule according to one embodiment of the present invention is mixed with the active material and the electrically conductive material, which are fine particles in a powder state, to combine each component to help the growth of the particles. The sulfide-based solid electrolyte among solid electrolytes is sensitive to moisture, for example, it generates H₂S gas, when it comes into contact with moisture, and thus it is preferable to exclude moisture as much as possible from the time of forming the granules. According to one embodiment of the present invention, the binder is an organic binder. The organic binder means a binder that is dissolved or dispersed in an organic solvent, particularly N-methylpyrrolidone (NMP), and is distinguished from an aqueous binder using water as a solvent or dispersion medium. Specifically, the organic binder may be selected from the group consisting of polyvinylidene fluoride (PVDF), vinylidene fluoride-hexafluoropropylene copolymer (PVDF-co-HFP), polyvinyl alcohol, starch, hydroxypropylcellulose, regenerated cellulose, polyvinylpyrrolidone, polyimide, polyamideimide, polyethylene, polypropylene, ethylenepropylene-diene monomer (EPDM), sulfonated EPDM, styrene butadiene rubber and fluorine rubber, but is not limited thereto.

The solid electrolyte powder according to one embodiment of the present invention may be selected from the group consisting of sulfide-based solid electrolyte powder, oxide-based solid electrolyte powder, and combinations thereof, and more specifically, may be sulfide-based solid electrolyte powder. It may be preferable to use the sulfide-based solid electrolyte powder because it has excellent ion conductivity and stability and has the advantage of being easy to transform.

According to one embodiment of the present invention, the solid electrolyte powder is particles having an average particle diameter of 0.3gm to 3gm. Here, since the average particle diameter does not mean the particle diameter of a perfect spherical particle, the diameter refers to the largest value among distances from an arbitrary point on the surface of the particle to a point on another surface. Specifically, the average particle diameter of the solid electrolyte powder may be 0.3*µ*m or more, 0.5*µ*m or more, or 1.0*µ*m or more, and 3*µ*m or less, 2.5*µ*m or less, or 2*µ*m or less, and may be 0.5*µ*m to 2.5*µ*m, or 1*µ*m to 2*µ*m. If the average particle diameter of the solid electrolyte powder is less than the above range, since the size of the solid electrolyte powder is small compared to the pore size of the granules, the amount of the solid electrolyte powder that penetrates and coats between granules is reduced and thus the physical contact between the electrode active material and the solid electrolyte may not be easy as an all-solid-state battery. If the average particle diameter of the solid electrolyte powder exceeds the above range, since the distance between the surface in contact with the solid electrolyte and the center of the granule is increased, the electrode active materials contained in the granule may not be properly utilized.

The sulfide-based solid electrolyte powder is one that contains sulfur (S) and has the ion conductivity of a metal belonging to Group 1 or Group 2 of the periodic table, which may comprise Li-P-S-based glass or Li-P-S-based glass ceramics. Non-limiting examples of such sulfide-based solid electrolyte powder may be Li₂S-P₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅-Al₂S₃, Li₂S-GeS₂, and Li₂S-GeS₂-ZnS, and the sulfide-based solid electrolyte powder may contain one or more of these.

The oxide-based solid electrolyte powder is one that contains oxygen (O) and has the ion conductivity of a metal belonging to Group 1 or 2 of the periodic table. Non-limiting examples of such oxide-based solid electrolyte powder may comprise at least one selected from LLTO-based compounds, Li₆La₂CaTa₂O₁₂, Li₆La₂ANb₂O₁₂(A is Ca or Sr), Li₂Nd₃TeSbO₁₂, Li₃BO_{2.5}N_{0.5}, Li₉SiAlO₈, LAGP-based compounds, LATP-based compounds, Li₁₊ₓTi₂₋ₓAlₓSi_{y}(PO₄)_{3-y} (wherein, 0≤x≤1, 0≤y≤1), LiAlₓZr₂₋ₓ(PO₄)₃ (wherein, 0≤x≤1, 0≤y≤1), LiTiₓZr₂₋ₓ(PO₄)₃(wherein, 0≤x≤1, 0≤y≤1), LISICON-based compounds, LIPON-based compounds, perovskite-based compounds, NASICON-based compounds, and LLZO-based compounds.

Meanwhile, the solid electrolyte powder according to one embodiment of the present invention is distinguished from the solid electrolyte in a liquid phase in which the solid electrolyte powder is dissolved in a solvent. In other words, solid electrolyte powder means solid electrolyte powder in a solvent-free state.

In the step of preparing the granules, the granules may be prepared by a method commonly used in the art, and the preparation method is not particularly limited. When manufacturing the granules, the particle size of the granules can be grown to a specific level by adding a binder solution together with the electrode active material and the electrically conductive material, which are fine particles in a powder state. As the solvent is dried in the formed granules, the relatively light weight electrically conductive material and binder can be present on the surface of the granules. In addition, in the step of preparing the granules, the inside of the device can be rotated to spheroidize the granules and separate each granule, and this rotation causes a centrifugal force to act on the granules so that the electrically conductive material and the binder can be present on the surface of the granules. Specifically, the electrically conductive material may be attached to at least a portion of the surface of the active material, and the binder may be present on the surface of the granules in a form coated on at least a portion of the surface of the active material. Meanwhile, the solvent that can be used when forming granules is not particularly limited, and for example, may be N-methylpyrrolidone, isopropyl alcohol (IPA), dimethylformamide (DMF), dimethylacetamide (DMAc), benzene, toluene, tetrahydrofuran (THF), chloroform or the like.

In the step of mixing the granules with the solid electrolyte powder, the method of mixing the granules with the solid electrolyte powder is not particularly limited either. For example, the granules may be mixed with solid electrolyte powder with a mixer such as a thinky mixer. In this case, the granules are formed by drying the solvent as described above, and since the solid electrolyte powder is a solid electrolyte powder in a solvent-free state, the mixture of the granules and the solid electrolyte powder exists in a dry state distinct from a slurry. In this case, more uniform mixing between the mixtures is possible than when the electrode active material and the solid electrolyte are mixed in a slurry state, and thus the dispersibility can be improved. In particular, if the sulfide-based solid electrolyte is mixed with the electrode active material, the electrically conductive material, and the binder in a slurry state, not only is it difficult to uniformly disperse each material, but also there may be a problem that the electrically conductive material and the binder migrate to the surface of the electrode when manufacturing a high-loading electrode. The present invention can manufacture an electrode having excellent dispersibility between the electrode active material, the electrically conductive material, the binder, and the solid electrolyte and capable of being highly loaded with the electrode active material, by first preparing the granules while excluding the solid electrolyte, which may have a dispersibility problem, and then mixing the solid electrolyte with the prepared granules.

The mixture of the granules and the solid electrolyte powder according to one embodiment of the present invention is shown in FIG. 1. FIG. 1 shows the state before mixing and pressurizing the solid electrolyte powder with the granules, and in the mixture, the solid electrolyte powder covers the surface of the granules.

In the step of forming the electrode active material layer, the mixture of the granules and the solid electrolyte powder is placed on the current collector with a dry coating. In other words, no solvent is added to the mixture of the granules and the solid electrolyte powder, and the mixture is placed on the current collector under dry conditions. Therefore, since a drying process of the solvent is not required, generation of voids due to drying of the solvent can be prevented, and the process can be also simplified.

Also, in the step of forming the electrode active material layer, the pressurizing may be performed by a roll press. Specifically, the electrode active material layer can be formed by heating and pressurizing the mixture of the granules and the solid electrolyte powder disposed on the current collector while passing it between a pair of rollers together with the current collector. By dry-coating the mixture of the granules and the solid electrolyte powder on the current collector, a roll-to-roll continuous process is possible without applying an isotropic pressurization method, and thus the process can be simplified.

If the electrode for an all-solid-state battery according to one embodiment of the present invention is a positive electrode, the current collector may be a positive electrode current collector. Of course, the electrode manufactured in this way may be a positive electrode. In addition, when the electrode for an all-solid-state battery according to one embodiment of the present invention is a negative electrode, the current collector may be a negative electrode current collector. Of course, the electrode manufactured in this way may be a negative electrode.

The positive electrode current collector is not particularly limited as long as it has high electrical conductivity without causing chemical changes in the all-solid-state battery. For example, stainless steel, aluminum, nickel, titanium, sintered carbon, or aluminum or stainless steel whose surface is treated with carbon, nickel, titanium, silver or the like may be used. In this case, the positive electrode current collector can have minute irregularities formed on its surface to enhance the bonding force with the positive electrode active material, and may be formed in various forms such as film, sheet, foil, net, porous body, foam, nonwoven fabric or the like.

In addition, the negative electrode current collector is not particularly limited as long as it has electrical conductivity without causing chemical changes in the all-solid-state battery. For example, copper, stainless steel, aluminum, nickel, titanium, sintered carbon, or copper or stainless steel whose surface is treated with carbon, nickel, titanium, silver or the like, or aluminum-cadmium alloy or the like may be used. Also, as in the positive electrode current collector, the negative electrode current collector may be used in various forms such as film, sheet, foil, net, porous body, foam, nonwoven fabric or the like, on which minute irregularities are formed.

In the electrode for an all-solid-state battery manufactured by the method for manufacturing an electrode for an all-solid-state battery according to the aforementioned one embodiment, the porosity of the electrode active material layer may be less than 20%, more preferably 15% or less. For example, the porosity of the electrode active material layer may be 19% or less, 18% or less, 17% or less, 16% or less, 15% or less, 14% or less, 13% or less, 120 or less 11% or less or 10% or less, and more preferably may be 150 or less, 14% or less, 13% or less, 120 or less, 11% or less, or 10% or less. In addition, the porosity of the electrode active material layer may be exceeding 0%, 0% or more, 1% or more, 2% or more, 3% or more, 4% or more, or 5% or more. In an all-solid-state battery, since the electrolyte is in the solid phase rather than the liquid phase, as the porosity is decreased, the contact area between the electrode active material and the solid electrolyte is increased and comes into close contact with each other, and thus high ion conductivity can be exhibited. Therefore, in terms of ion conductivity, the lower the porosity of an electrode for an all-solid-state battery, the more preferable it is. According to the method for manufacturing an electrode for an all-solid-state battery of the present invention, an electrode for an all-solid-state battery can be manufactured, which comprises an electrode active material layer with sufficiently low porosity to have good ion conductivity.

The term "porosity" means the ratio of the volume occupied by the pores to the total volume in a structure, and its unit is %. The porosity may be measured by a Brunauer-Emmett-Teller (BET) measurement method using nitrogen gas or a mercury penetration method (Hg porosimeter), etc., but is not limited thereto.

In addition, in the electrode for an all-solid-state battery manufactured by the method for manufacturing an electrode for an all-solid-state battery according to the aforementioned one embodiment, the loading amount of the electrode active material in the electrode active material layer may be 3 mAh/g or more. More specifically, the loading amount of the electrode active material in the electrode active material layer may be 3.0 mAh/g or more, 3.5 mAh/g or more, 4.0 mAh/g or more, 4.5 mAh/g or more, 4.6 mAh/g or more, 4.7 mAh/g or more, 4.8 mAh/g or more, 4.9 mAh/g or more, or 5.0 mAh/g or more. In addition, the loading amount of the electrode active material in the electrode active material layer may be 9.0 mAh/g or less, and more specifically, may be 9.0 mAh/g or less, 8.0 mAh/g or less, 7.0 mAh/g or less, 6.0 mAh/g or less, 5.5 mAh/g or less, or 5.0 mAh/g or less. According to the method for manufacturing an electrode for an all-solid-state battery of the present invention, the problem of migration of an electrically conductive material and a binder to the surface of the electrode is prevented by manufacturing granules containing an electrode active material, an electrically conductive material and a binder, and thus each material is uniformly dispersed, and the porosity of the electrode active material layer can be reduced by mixing the prepared granules with a ductile all-solid electrolyte, thereby providing an electrode for an all-solid-state battery highly loaded with the electrode active material, and thus improving the performance of the battery.

Meanwhile, the electrode for an all-solid-state battery according to one embodiment of the present invention may be manufactured according to the method for manufacturing an electrode for an all-solid-state battery according to one embodiment of the present invention described above, and thus comprises a current collector and an electrode active material layer disposed on the current collector. Here, the electrode active material layer includes an electrode active material, an electrically conductive material, a binder and a solid electrolyte, and of course, the solid electrolyte may be a sulfide-based solid electrolyte.

Since descriptions of each component comprised in the electrode for an all-solid-state battery according to one embodiment of the present invention are the same as those described above in the description of the method for manufacturing an electrode for an all-solid-state battery according to one embodiment of the present invention, a detailed description thereof will be omitted.

Hereinafter, preferred examples are presented to help the understanding of the present invention. However, the following examples are only provided to aid understanding of the present invention, and the present invention is not limited to the following examples.

### Example

LiNi_{0.6}Co_{0.2}Mn_{0.2}O₂(NCM 622) as an electrode active material, carbon black as an electrically conductive material, and polyvinylidene fluoride (PVDF) as a binder were mixed in N-methylpyrrolidone solvent in a weight ratio of 94: 3: 3 (electrode active material: electrically conductive material: binder) to prepare a slurry, and then the solvent was dried by a spray drying method to prepare granules (porosity: about 30%) having a diameter of about 60 *µ*m.

The prepared granules were mixed with sulfide-based solid electrolyte powder of Li₂S-P₂S₅ in a weight ratio of 80: 20 (granules: solid electrolyte powder) using a thinky mixer, and the mixture of the granules and the solid electrolyte powder was placed on one side of an aluminum current collector with a thickness of about 100 *µ*m. After that, the current collector and the mixture were pressed by a roll press with a gap of 80*µ*m at a temperature of 40 °C to manufacture a positive electrode for a solid-state battery having the loading amount of the electrode active material of 4.7 mAh/g and the thickness of the electrode active material layer of about 120 *µ*m.

### Comparative Example

LiNi_{0.6}Co_{0.2}Mn_{0.2}O₂(NCM 622) as an electrode active material, carbon black as an electrically conductive material, polyvinylidene fluoride (PVDF) as a binder, and Li₂S-P₂S₅ as a solid electrolyte were mixed in anisole solvent at a weight ratio of 78: 1: 1: 20 (electrode active material: electrically conductive material: binder: solid electrolyte) using a thinky mixer to prepare a slurry. Next, the prepared slurry was applied on one surface of an aluminum current collector having a thickness of about 100 *µ*m with a bar coater, and the solvent was volatilized by a vacuum dry method. Then, after sealing the laminate comprising the current collector and the slurry from which the solvent was removed, it was pressed by cold isostatic pressing (CIP) under a pressure condition of 500 MPa to manufacture a positive electrode for an all-solid-state battery having the loading amount of the electrode active material of 4.5 mAh/g and the thickness of the electrode active material layer of about 120 *µ*m.

The porosity of the electrode active material layer according to the Example and the Comparative Example of Preparation Example is as shown in Table 1.

**Table 1:**

| | Example | Comparative Example |
|---|---|---|
| Porosity before pressurization (%) | - | 35 |
| Porosity after pressurization (%) | 10 | 20 |

Referring to Table 1, it can be seen that the porosity of the electrode active material layer according to the Example is 10%, which is lower than the porosity of 20% of the electrode active material layer according to the Comparative Example. That is, it can be seen that according to the present invention, an electrode including a high loading electrode active material layer having low porosity can be manufactured.

In the above, although one embodiment and specific examples of the present invention have been described by way of example, this should be understood to help understanding of the present invention and should not be construed as limiting the embodiments of the present invention. Those skilled in the art may appropriately modify and implement one embodiment and the Example of the present invention by omitting, changing, substituting all or part of the components of one embodiment and Example of the present invention, or adding other components with reference to this specification and the accompanying drawings, within the scope not departing from the technical spirit of the present invention. Therefore, the protection scope of the present invention should be construed by the following claims, and all technical ideas within the equivalent range should be construed as being included in the scope of the present invention.

Unless otherwise defined, all terms and expressions used in this specification should be understood as meanings commonly understood by those of ordinary skill in the art to which this disclosure belongs. In addition, the terms and expressions used herein should be interpreted broadly and should not be construed in a limiting sense.

As used herein, the expression "comprise" does not exclude the presence or addition of one or more other components other than the recited components.

Also, as used herein, the singular expression comprises plural forms unless explicitly excluded from the context.

Each of the embodiments described as examples in this specification can be combined with each other, and unless contradictory, contents described in a specific Example can be equally applied to other embodiments even if they are not described in other embodiments.

## Claims

1. A method of manufacturing an electrode for an all-solid-state battery, comprising:
preparing granules containing an electrode active material, an electrically conductive material, and a binder;
mixing the granules with solid electrolyte powder; and
forming an electrode active material layer by placing a mixture of the granules and the solid electrolyte powder on a current collector and pressurizing the mixture.

2. The method of manufacturing an electrode for an all-solid-state battery according to claim 1, wherein the porosity of the electrode active material layer is 15% or less.

3. The method of manufacturing an electrode for an all-solid-state battery according to claim 1, wherein the loading amount of the electrode active material in the electrode active material layer is 3 mAh/g or more.

4. The method of manufacturing an electrode for an all-solid-state battery according to claim 1, wherein in the step of forming the electrode active material layer, the mixture of the granules and the solid electrolyte powder is disposed on the current collector as a solvent-free coating.

5. The method of manufacturing an electrode for an all-solid-state battery according to claim 1, wherein in the step of forming the electrode active material layer, the pressurizing is performed by a roll press.

6. The method of manufacturing an electrode for an all-solid-state battery according to claim 1, wherein in the step of preparing the granules, the electrically conductive material is attached to at least a portion of the surface of the active material, and the binder is coated on at least a portion of the surface of the active material.

7. The method of manufacturing an electrode for an all-solid-state battery according to claim 1, wherein the solid electrolyte powder is a sulfide-based solid electrolyte powder.

8. The method of manufacturing an electrode for an all-solid-state battery according to claim 1, wherein the electrode active material layer is a positive electrode active material layer.

9. An electrode for an all-solid-state battery comprising a current collector; and an electrode active material layer disposed on the current collector and including an electrode active material, an electrically conductive material, a binder, and a sulfide-based solid electrolyte,
wherein the porosity of the electrode active material layer is less than 20%.

10. The electrode for an all-solid-state battery according to claim 9, wherein the porosity of the electrode active material layer is less than 15%.

11. The electrode for an all-solid-state battery according to claim 9, wherein the loading amount of the electrode active material in the electrode active material layer is 3 mAh/g or more.
